# EUROPEAN PATENT APPLICATION

(11) **EP 4 491 032 A1**
(43) Date of publication of application: **15.01.2025**
(21) Application number: 23766484.2
(22) Date of filing: 16.02.2023
(51) Int. Cl.: A23J 3/26, A23J 3/14, A23J 3/16, A23J 3/18

(54) **PRODUCTION METHOD FOR PROTEIN FOOD INGREDIENT, AND PROTEIN FOOD INGREDIENT**

(30) Priority: 11.03.2022 JP 2022038604; 06.10.2022 JP 2022161912
(71) Applicant: FUJIFILM Corporation, Tokyo 106-8620 (JP)
(72) Inventor: AONO, Naruhiko, Ashigarakami-gun, Kanagawa 258-8577 (JP); MOCHIZUKI, Yusuke, Ashigarakami-gun, Kanagawa 258-8577 (JP)
(74) Representative: HGF
(86) International application number: PCT/JP2023/005563
(87) International publication number: WO 2023/171304

(57) **Abstract**

Provided are a method for producing a protein food material, including a step of pressurizing and heating a protein-containing mixture containing a vegetable protein and water in a biaxial extruder to knead the protein-containing mixture, and extruding the kneaded protein-containing mixture from a jetting die provided in the biaxial extruder, in which a temperature of the jetting die is 95°C or higher and 120°C or lower; and a protein food material.

## Description

### BACKGROUND OF THE INVENTION

### 1. Field of the Invention

The present disclosure relates to a method for producing a protein food material, and a protein food material.

### 2. Description of the Related Art

Livestock meat is a food material which is largely consumed all over the world. However, from the viewpoint of health maintenance, attempts have been made to reduce intake of livestock meat and to consume a meat substitute prepared from a plant-derived vegetable protein such as soybean. Accordingly, various processing techniques for obtaining the meat substitute using a protein raw material as a substitute for the livestock meat have been proposed.

For example, JP1985-221041A (JP-S60-221041A) proposes producing a fibrous protein material from a protein-containing mixture containing oilseed protein, wheat gluten, and water, using an extruder having a biaxial screw. JP1989-23856A (JP-S64-23856A) proposes a method of producing a protein food material having a dense tissue by cooling a mouthpiece provided at a distal end of an extruder having a biaxial screw for extruding the above-described protein-containing mixture.

### SUMMARY OF THE INVENTION

The meat substitute tends to be required to have a meaty appearance. Here, the "meaty appearance" means an appearance having a fibrous structure such as muscle fibers, and having a concave-convex feeling of the fibrous structure which can be visually confirmed from the surface.

An object to be achieved by an embodiment of the present disclosure is to provide a method for producing a protein food material having an excellent meaty appearance and to provide a protein food material.

The present disclosure includes the following embodiments.
[1] A method for producing a protein food material, comprising:
   a step of pressurizing and heating a protein-containing mixture containing a vegetable protein and water in a biaxial extruder to knead the protein-containing mixture, and extruding the kneaded protein-containing mixture from a jetting die provided in the biaxial extruder,
   in which a temperature of the jetting die is 95°C or higher and 120°C or lower.
[2] The method for producing a protein food material according to [1], in which the jetting die has a flow passage having a slit shape.
[3] The method for producing a protein food material according to [1] or [2],
   in which a length of the jetting die in an extrusion direction is in a range of 90 mm or more and 450 mm or less.
[4] The method for producing a protein food material according to any one of [1] to [3],
   in which the vegetable protein is at least one selected from the group consisting of defatted soybean protein and wheat gluten.
[5] The method for producing a protein food material according to any one of [1] to [4], in which the protein-containing mixture further contains a colorant.
[6] A protein food material comprising:
   a vegetable protein,
   in which the protein food material has a fibrous region on at least a part of a surface, and has a porous structure, and
   in an infrared absorption spectrum of the fibrous region, obtained by measuring the fibrous region by a polarized infrared total reflection absorption measurement method, in a case where an intensity ratio of a peak intensity of an amide I band to a peak intensity of an amide II band, which are measured by irradiating the fibrous region with a polarized light parallel to the fiber direction of the fibrous region, is denoted as X_{A}, and an intensity ratio of a peak intensity of an amide I band to a peak intensity of an amide II band, which are measured by irradiating the fibrous region with polarized light perpendicular to the fiber direction of the fibrous region, is denoted as X_{B}, an alignment degree X_{A}/X_{B} satisfies 1.005 ≤ X_{A}/X_{B}.
[7] The protein food material according to [6],
   in which the vegetable protein is at least one selected from the group consisting of defatted soybean protein and wheat gluten.
[8] The protein food material according to [6] or [7], further comprising: a colorant.

According to the embodiment of the present disclosure, there is provided a method for producing a protein food material having an excellent meaty appearance and to provide a protein food material.

### BRIEF DESCRIPTION OF THE DRAWINGS

Fig. 1A is a schematic cross-sectional view showing an example of a biaxial extruder.
Fig. 1B is an enlarged view of a broken line portion indicated by a reference numeral A in Fig. 1A.
Fig. 2A is an image showing a cross section of a protein food material produced in Example 2.
Fig. 2B is an image showing a cross section of a protein food material produced in Comparative Example 3.
Fig. 3A is an image showing a surface of the protein food material produced in Example 2.
Fig. 3B is an image showing a surface of the protein food material produced in Comparative Example 3.
Fig. 4 is a diagram showing an infrared absorption spectrum in a case where a protein food material 4 produced in Example 4 was irradiated with s-polarized light in parallel and perpendicular to a fiber direction.

### DESCRIPTION OF THE PREFERRED EMBODIMENTS

Hereinafter, an embodiment which is an example according to the present disclosure will be described. These descriptions and examples are only illustrative of the embodiments and do not limit the scope of the invention.

In numerical ranges described in stages in the present specification, an upper limit value or a lower limit value described in one numerical range may be replaced with an upper limit value or a lower limit value of a numerical range described in another stage. In addition, in the numerical ranges described in the present specification, the upper limit value or the lower limit value of the numerical ranges may be replaced with the values shown in examples.

Each component may contain a plurality of kinds of substances corresponding thereto.

In a case where the amount of each component in a composition is referred to, and in a case where a plurality of substances corresponding to each component in the composition are present, it means the total amount of a plurality of substances present in the composition, unless otherwise specified.

"Step" includes not only an independent step but also a step that cannot be clearly distinguished from other steps, as long as the desired action of the step is achieved.

In the present specification, a combination of two or more preferred aspects is a more preferred aspect.

### <Method for producing protein food material>

The method for producing a protein food material according to the present disclosure (hereinafter, also simply referred to as "production method according to the present disclosure") includes a step of pressurizing and heating a protein-containing mixture containing a vegetable protein and water in a biaxial extruder to knead the protein-containing mixture, and extruding the kneaded protein-containing mixture from a jetting die provided in the biaxial extruder (hereinafter, referred to as an extrusion step), in which a temperature of the jetting die is 95°C to 120°C.

The protein food material produced by the production method according to the present disclosure has an excellent meaty appearance. The reason is presumed as follows.

As described in JP1985-221041A (JP-S60-221041A) and JP1989-23856A (JP-S64-23856A), a method of obtaining a protein food material using an extruder or the like to jet a pressurized and heated protein-containing substance, and fiberizing (that is, aligning) and expanding (that is, forming porous) the mixture has been known. For example, in the technique described in JP1989-23856A (JP-S64-23856A), a die attached to a biaxial extruder is cooled to be substantially expanded, but the expansion (porous formation) is suppressed to obtain a protein food material having a dense structure and to obtain a meaty texture. However, JP1985-221041A (JP-S60-221041A) and JP1989-23856A (JP-S64-23856A) do not focus on the meaty appearance.

On the other hand, in order for a substitute to have a meaty appearance similar to that of livestock meat, it is preferable that the substitute has a groove-like concave-convex shape on the surface, which resembles muscle fibers. From the viewpoint of meaty appearance, the present inventors have focused on a correlation between the temperature of the jetting die and the appearance of the protein food material in the method for producing a protein food material. The production method according to the present disclosure includes the step of pressurizing and heating a protein-containing mixture containing a vegetable protein and water in a biaxial extruder to knead the protein-containing mixture, and extruding the kneaded protein-containing mixture from a jetting die provided in the biaxial extruder, in which a temperature of the jetting die is 95°C to 120°C. As a result, it is presumed that, in the temperature range of the jetting die of 95°C to 120°C, which has not been focused in the related art, a balance between fiber formation (alignment) and expansion (porous formation) is ensured, and a protein food material having an excellent meaty appearance can be produced.

One embodiment according to the present disclosure includes a protein food material containing a vegetable protein, in which the protein food material has a fibrous region on at least a part of a surface, and has a porous structure, and in an infrared absorption spectrum (hereinafter, also referred to as "IR spectrum") obtained by measuring the fibrous region by a polarized infrared total reflection absorption measurement method (hereinafter, also referred to as "polarization ATR-IR method"), in a case where an intensity ratio of a peak intensity of an amide I band to a peak intensity of an amide II band, which are measured by irradiating the fibrous region with a polarized light parallel to the fiber direction of the fibrous region, is denoted as X_{A}, and an intensity ratio of a peak intensity of an amide I band to a peak intensity of an amide II band, which are measured by irradiating the fibrous region with polarized light perpendicular to the fiber direction of the fibrous region, is denoted as X_{B}, an alignment degree X_{A}/X_{B} satisfies 1.005 ≤ X_{A}/X_{B}.

The above-described protein food material is one aspect of the protein food material produced by the production method according to the present disclosure, and has an excellent meaty appearance.

Hereinafter, the protein food material produced by the production method according to the present disclosure, including the above-described protein food material, is collectively referred to as a protein food material according to the present disclosure.

Hereinafter, each step included in the production method according to the present disclosure will be described.

### [Extrusion step]

The extrusion step is a step of pressurizing and heating a protein-containing mixture containing a vegetable protein and water in a biaxial extruder to knead the protein-containing mixture, and extruding the kneaded protein-containing mixture from a jetting die provided in the biaxial extruder.

The extruder used in the extrusion step is a biaxial extruder, and for example, a non-intermeshing counter-rotating biaxial screw extruder, an intermeshing counter-rotating biaxial screw extruder, or an intermeshing co-rotating biaxial screw extruder can be used.

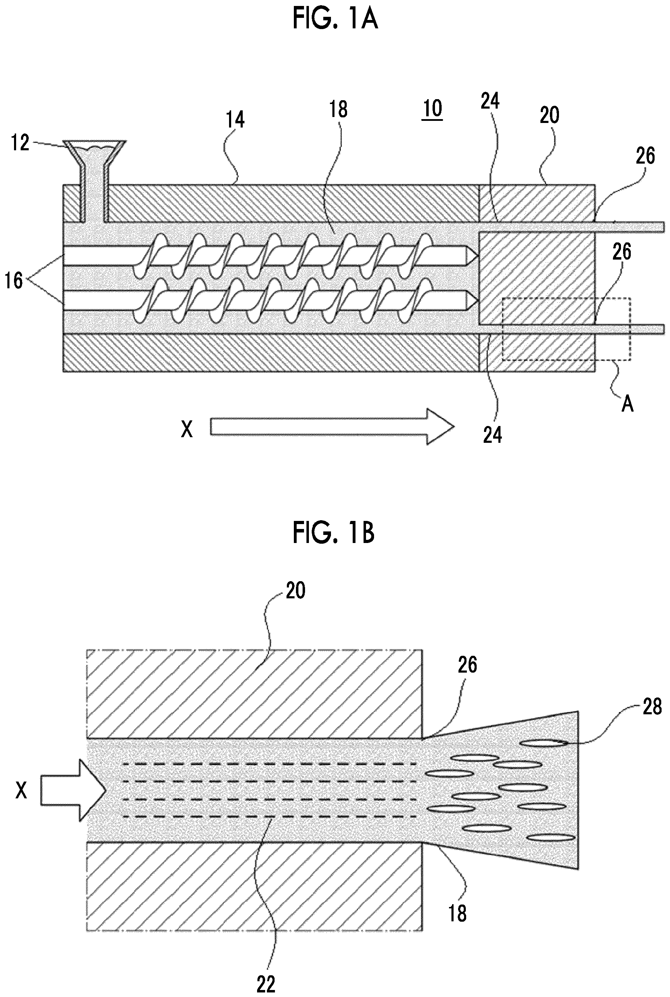

The extrusion step will be described with reference to Fig. 1A and Fig. 1B. Fig. 1A is a schematic cross-sectional view showing an example of the biaxial extruder. It should be noted that each element in the drawing is not always to scale, the main focus is on clearly showing the principles of the present disclosure, and some parts are emphasized.

As shown in Fig. 1, in the extrusion step, a vegetable protein which is a raw material of the protein food material and water are charged into a biaxial extruder 10 from a hopper 12. As the raw material of the protein food material, it is preferable that the water is contained in 1 part by mass or more and 5 parts by mass or less with respect to 10 parts by mass of the raw material containing the vegetable protein. The "raw material containing the vegetable protein" may be the vegetable protein itself or a complex containing the vegetable protein and other components.

It is also preferable that the raw material further contains a colorant. Examples of the complex containing the vegetable protein and other components include defatted soybean flour, which is a complex including a protein, a saccharide, and a fiber.

The charged raw materials are kneaded in the biaxial extruder 10 by heating a barrel 14 and rotating two screws 16 to form a protein-containing mixture 18, and the protein-containing mixture 18 is extruded in an extrusion direction X.

A temperature of a barrel of the extruder is preferably 40°C or higher and 170°C or lower. Specifically, it is preferable that a temperature of the barrel on the upstream side of the center part in an extrusion direction (in a part from a raw material supply portion to the center of the barrel) is 40°C or higher and 150°C or lower, a temperature of the barrel 14 in the center part in the extrusion direction (the center of axial direction length of the barrel) is 130°C or higher and 170°C or lower, and a temperature of the barrel on the downstream side of the center part in the extrusion direction (a part from the center of the barrel to a distal end of the barrel) is 140°C or higher and 170°C or lower.

The biaxial extruder 10 is provided with a jetting die 20 at a distal end of the barrel 14.

It is preferable that the jetting die 20 has an outlet from which a sheet-like extruded product is obtained.

The jetting die 20 preferably has a flow passage having a slit shape. The protein-containing mixture flows through the flow passage.

A gap (lip clearance) of the outlet of the jetting die 20 is preferably 1 mm or more and 10 mm or less, and more preferably 1 mm or more and 5 mm or less. The gap (lip clearance) of the outlet refers to a length of the shortest diameter in the outlet.

From the viewpoint of obtaining a protein food material having an excellent meaty appearance, a length of the jetting die 20 in the extrusion direction is preferably 90 mm or more and 450 mm or less, and more preferably 150 mm or more and 300 mm or less.

The jetting die 20 is preferably a cooling die. Here, the cooling die refers to a die which is cooled by circulating a cooling liquid (a refrigerant such as water, glycol, and air).

By using the cooling die, it is easy to control expansion of the extruded mixture. That is, the mixture circulated through the jetting die and rubbed against the inner wall surface while being sheared is controlled in terms of expansion during the jetting, and is easily maintained in terms of fibrousness.

The protein-containing mixture 18 kneaded by heating and pressurizing in the barrel 14 is temperature-controlled in a case of passing through the jetting die 20, and is jetted from the outlet of the jetting die 20.

A temperature of the jetting die 20 is 95°C or higher and 120°C or lower, and from the viewpoint of obtaining a protein food material having an excellent meaty appearance, it is preferably 100°C or higher and 115°C or lower, and more preferably 100°C or higher and 110°C or lower.

As shown in Fig. 1A, the jetting die 20 includes a slit-shaped jetting flow passage 24 which is provided to communicate with the inside of the barrel 14. The jetting flow passage 24 of the jetting die 20 has a slit shape being a concentric circle shape. The fact that the slit shape is "concentric circle shape" means that, in the cross-sectional view orthogonal to the extrusion direction X of the protein-containing mixture, a shape of the jetting flow passage 24 is defined by a gap formed between two concentric circles having different sizes.

The slit shape may be a plate shape, a circular shape, or the like, in addition to the concentric circle shape.

The protein-containing mixture passing through the jetting flow passage 24 in the extrusion direction X is jetted in a plate shape (for example, a sheet shape or a film shape) from the outlet 26 which is the distal end of the jetting flow passage 24.

From the viewpoint of obtaining a protein food material having an excellent meaty appearance, a jetting amount of the protein-containing mixture 18 is preferably 10 kg/hr or more and 100 kg/hr or less, and more preferably 20 kg/hr or more and 80 kg/hr or less.

Fig. 1B is an enlarged view of a broken line portion indicated by a reference numeral A in Fig. 1A.

As shown in Fig. 1A and Fig. 1B, the protein-containing mixture 18 extruded from the barrel 14 to the jetting die 20 is subjected to a shear stress by the kneading, and is further subjected to a shear stress by being brought into contact with and rubbed against the inner wall of the flow passage in the downstream jetting die 20, whereby the protein is aligned and fiberized while passing through the jetting die 20. In Fig. 1B, a broken line indicated by a reference numeral 22 schematically shows the aligned and fiberized protein.

The protein-containing mixture 18 which has passed through the jetting die 20 is extruded from the outlet 26 of the jetting die 20 under atmospheric pressure. In a case where the protein-containing mixture 18 immediately after the kneading is extruded under atmospheric pressure, the protein-containing mixture 18 is expanded (that is, formed into porous) by vaporization of moisture, and the protein food material has a porous structure. In the production method according to the present disclosure, since the temperature of the jetting die 20 is 95°C or higher and 120°C or lower, voids having a smaller size (for example, a cross-sectional area in a direction perpendicular to the fiber; 0.1 mm² or less) are likely to be generated. In Fig. 1B, a reference numeral 28 schematically shows a void formed by the production method according to the present disclosure. As the voids in the porous structure are smaller, the voids are correlated with a surface having a more excellent meaty appearance.

Next, components used as raw materials of the protein food material, such as a vegetable protein and a colorant, will be described.

### - Vegetable protein -

In the production method according to the present disclosure, a vegetable protein is used as a raw material. That is, the protein food material according to the present disclosure contains a vegetable protein, and the vegetable protein is a protein collected from a plant.

The vegetable protein is not particularly limited as long as it is a protein collected from a plant. Examples of the origin of the vegetable protein include grains such as wheat, barley, oat, rice, and corn; beans such as soybean, pea, red bean, chickpea, lentil, broad bean, mung bean, and lupin; seeds such as almond, peanut, cashew nut, pistachio, hazelnut, Macadamia nut, linseed, sesame, rapeseed, cotton seed, safflower, and sunflower; tubers and roots such as potato, sweet potato, Japanese yam, Jerusalem artichoke, and cassava; vegetables such as asparagus, globe artichoke, cauliflower, broccoli, and green soybean; fruits such as banana, jackfruit, kiwifruit, coconut, avocado, and olive; mushrooms such as a mushroom, eryngii mushroom, shiitake mushroom, shimeji mushroom, and maitake mushroom; and algae such as chlorella, spirulina, euglena, laver, kelp, wakame seaweed, hijiki seaweed, agar weed, and mozuku seaweed. Among these, from the viewpoint of obtaining a chunk-like meat substitute which has an appearance and texture similar to actual livestock meat, the origin of the vegetable protein is preferably at least one selected from the group consisting of wheat, soybean, pea, and rice, and more preferably at least one selected from the group consisting of soybean and wheat. The vegetable protein is particularly preferably at least one selected from defatted soybean protein and wheat gluten.

Here, in the present disclosure, the "chunk" refers to raw meat which is not cooked and is cut out from livestock for food to have an optional size, and cooked meat obtained by cooking the raw meat, and refers to livestock meat which is not ground or minced after being cut out from the livestock.

The vegetable protein may include one kind of vegetable protein or may include two or more kinds of vegetable proteins. In a case where two or more kinds of vegetable proteins are used, the type and the blending ratio thereof can be appropriately determined.

For example, in a case where defatted soybean containing defatted soybean protein, and wheat gluten are used as the raw material containing a vegetable protein, from the viewpoint of obtaining a favorable meaty appearance, a mass ratio of defatted soybean:wheat gluten is preferably 80:20 to 60:40.

A content of the protein is preferably 5% by mass or more and 80% by mass or less, more preferably 7% by mass or more and 70% by mass or less, and still more preferably 10% by mass or more and 60% by mass or less with respect to the entire protein food material.

### - Water -

In the production method according to the present disclosure, water is used.

A content of the water in the protein-containing mixture is preferably 20% by mass to 40% by mass with respect to the entire protein-containing mixture containing the water.

### - Colorant -

The protein food material according to the present disclosure preferably contains a colorant. In a case where the protein food material contains a colorant, it is easy to obtain the same color tint as the color tint exhibited by the brown meat after heating.

The colorant is preferably an edible and brown colorant.

Examples of the colorant include a cocoa coloring agent, a Monascus coloring agent, and a plant charcoal powder coloring agent, and among these, a cocoa coloring agent is preferable.

The protein food material may contain only one kind of colorant, or may contain two or more kinds thereof.

A content of the colorant contained in the protein food material is preferably 0.01% by mass or more and 3% by mass or less, more preferably 0.05% by mass or more and 2% by mass or less, and still more preferably 0.1% by mass or more and 1% by mass or less with respect to the entire protein food material.

The protein food material may contain other additives, in addition to the protein and the colorant contained as necessary. Examples of the other additives include water, a seasoning, an inorganic salt or an organic salt, sugar, oil and fat, a thickener, a plasticizer, a surfactant, and a fragrance component. A content of the other additives can be set according to the purpose.

The mixture (that is, the protein food material) extruded in the extrusion step can be used as a meat substitute as it is without performing any particular processing. That is, the extruded mixture (protein food material) can be used as it is as a heated meat substitute. The mixture may be cooked with any seasoning or the like in a state of being extruded.

In addition, the extruded mixture can be subjected to desired processing such as molding.

### [Forming step]

The production method according to the present disclosure may include a forming step after the extrusion step.

The forming step may include cutting the extruded mixture (that is, the protein food material) into a shape according to the purpose. For example, the cut protein food material can be used as a meat substitute having a thin sliced meat-like shape. The cut protein food material may be cooked with any seasoning or the like.

The forming step may include processing the protein food material into a formed body having a shape according to the purpose.

For example, by collecting the protein food material in a lump and forming the protein food material into a shape similar to a shape of a chunk of meat, it is possible to manufacture a lean-like portion of a chunk-like alternative restructured meat. From the viewpoint of obtaining an alternative restructured meat having a texture closer to that of a chunk of meat, it is preferable that the raw materials of the extruded lean-like portion are collected in a lump, and the extrusion directions of the raw materials of the extruded lean-like portion are aligned in the same direction.

Alternatively, the extrusion direction inside the protein food material may be aligned by the same method such as a method of collecting the protein food material in a lump and then applying pressure to flatten the protein food material, and a method of passing the protein food material through a tubular space.

### [Other steps]

The method for producing the protein food material may include a step other than the above-described extrusion step and the above-described forming step. As the other steps, any step such as a drying step, a crushing step, and a packaging step may be included.

### (Form of protein food material)

It is preferable that the protein food material obtained by the production method according to the present disclosure (that is, the protein food material according to the present disclosure) has a fibrous region on at least a part of a surface, and has a porous structure.

Here, the "having a fibrous region on at least a part of a surface" means that the surface of the protein food material has streak-like irregularities at least in a part of the surface in appearance.

In addition, having a porous structure means that protein material according to the present disclosure has an isotropic or anisotropic porous structure in appearance. The anisotropic porous structure refers to a structure in which a pore shape appearing on a cut surface obtained by cutting the protein food material at any position is different from an elliptical shape depending on a cutting direction. The isotropic porous structure refers to a structure in which a pore shape appearing on a cut surface obtained by cutting the protein food material at any position is substantially elliptical and substantially the same regardless of the direction. It is preferable that the protein food material obtained by the production method according to the present disclosure has an anisotropic porous structure.

Examples of a method of observing the cut surface include a method of cutting out a piece of the specimen and observing the cut surface with a microscope, and a method of observing the cut surface with X-ray computed tomography (CT).

In the protein food material according to the present disclosure, the proportion of the number of voids having a cross-sectional area of 0.1 mm² or less in a cross section parallel to a direction orthogonal to a fiber direction (proportion of the number of voids) is 50% or more with respect to the total number of voids present in the cross section. In a case where the proportion of the number of voids is 50% or more, the protein food material has an excellent meaty appearance. From the viewpoint of meaty appearance, the proportion of the number of voids is more preferably 60% or more and still more preferably 64% or more. The upper limit value of the proportion of the number of voids is not particularly limited, but is preferably 95% or less.

Hereinafter, a method for measuring the proportion of the number of voids will be described.

### <Preparation of sample for measurement>

As a protein food material to be used as a sample for measurement of the proportion of the number of voids, a protein food material which is obtained by determining a fiber direction by a method described in "(1) Determination of fiber direction" below, forming a cut surface (cross section for measurement) by a method described in "(2) Formation of cross section" below, and then drying the protein food material under conditions described in "(3) Drying" below is used.

### (1) Determination of fiber direction

In the present disclosure, the "fiber direction" means a longitudinal direction of a fiber present in the fibrous region of the protein food material, and is determined by the following method.

In a case where the protein food material to be measured has a size which can be torn by a tearing unit (for example, a hand), the "fiber direction" refers to a direction in which the protein food material is torn. Specifically, an end part of the protein food material to be measured is gripped, and the protein food material is torn in a direction in which the protein food material can be torn to obtain a sample for measurement. The obtained sample for measurement is viewed from an upper surface, two points separated by 5 mm on a tear line are randomly selected, and a direction of a straight line connecting the two points is defined as the fiber direction.

In a case where the protein food material to be measured cannot be torn by the tearing unit or it is difficult to tear the protein food material to be measured by the tearing unit, the "fiber direction" is determined based on a longitudinal direction of a fiber present in the fibrous region on the surface of the protein food material. Specifically, a streak-like convex portion present in the fibrous region on the surface of the protein food material to be measured is randomly selected, and a direction of a straight line along the longitudinal direction of the convex portion is defined as the fiber direction.

### (2) Formation of cross section

The protein food material in which the fiber direction has been determined is cut in parallel in a direction orthogonal to the fiber direction using a cutting unit to form a cut surface (cross section for measurement). As the cutting unit, a known cutting unit such as a knife or a single-edged razor may be used.

### (3) Drying

The protein food material in which the cut surface (cross section for measurement) has been formed is allowed to stand in a vacuum oven (product name: VOS-201SD, manufactured by EYELA) connected to a vacuum pump (product name: GCD-051XF, manufactured by ULVAC, Inc.), and put into a vacuum state by the vacuum pump, followed by drying for 17 hours under conditions of 60°C.

Using the above-described protein food material (sample for measurement) after the drying, the measurement of the proportion of the number of voids is performed as follows.

### <Measurement of proportion of number of voids>

Using an optical microscope (product name: VHX-5000, manufactured by KEYENCE CORPORATION) to which a zoom lens (product name: VH-ZST, manufactured by KEYENCE CORPORATION) is attached, the cut surface (cross section for measurement) formed in the sample for measurement is observed with an objective lens (product name: ZS-20, manufactured by KEYENCE CORPORATION) at a lens magnification of 30 times.

With regard to all voids present in the observed cut surface, an edge of a void is outlined in a polygonal mode using an area measurement function of the optical microscope: VHX-5000, and the size of the void is detected to calculate a cross-sectional area (mm²) of each void.

Based on the obtained cross-sectional area, a proportion (%) of the number of voids having a cross-sectional area of 0.1 mm² or less with respect to the total number of voids present in the cut surface is calculated.

The proportion (%) of the number of voids in the protein food material is a value obtained by determining the fiber direction by the above-described method for each of two samples for measurement, which are prepared from the protein food material to be measured, performing the above-described measurement for each sample for measurement, calculating the proportions (%) of the number of voids, and arithmetically averaging the obtained two number proportions (%).

A shape of the void included in the protein food material according to the present disclosure is not particularly limited, and may be any of a spherical shape, an elliptical shape, a cylindrical shape, a disk shape, or the like. From the viewpoint of improving the meaty appearance, the shape is preferably cylindrical.

### (Alignment degree X_{A}/X_{B} of fibrous region)

With regard to the protein food material according to the present disclosure, in the IR spectrum obtained by a measurement of the polarization ATR-IR method, in a case where an intensity ratio of a peak intensity of an amide I band to a peak intensity of an amide II band, which are measured by irradiating the fibrous region with a polarized light parallel to the fiber direction of the fibrous region, is denoted as X_{A}, and an intensity ratio of a peak intensity of an amide I band to a peak intensity of an amide II band, which are measured by irradiating the fibrous region with polarized light perpendicular to the fiber direction of the fibrous region, is denoted as X_{B}, an alignment degree X_{A}/X_{B} satisfies 1.005 ≤ X_{A}/X_{B}.

In the present disclosure, the fact that the alignment degree X_{A}/X_{B} of the fibrous region satisfies 1.005 ≤ X_{A}/X_{B} means that the vegetable protein contained in the fibrous region (that is, vegetable protein fiber) is highly aligned.

Hereinafter, a method for measuring the alignment degree X_{A}/X_{B} in the fibrous region included in the protein food material will be described.

### <Preparation of sample for measurement>

The fibrous region on the surface of the protein food material to be measured is thinly cut away using a cutting unit (a razor or the like) to obtain a cutting piece. In a case where contamination is observed on the outermost surface, the surface may be scraped off and the exposed surface may be used for the measurement. A thickness of the cutting piece is set to 100 µm to 5,000 µm. A size of the cutting piece is fit within a square with a side of 0.5 cm to 3 cm. The obtained cutting piece is used as a sample for measurement.

### <Measurement device and measurement conditions>

· Measurement device
An IR device (manufactured by Bruker Corporation, Bertex 70) or an equivalent device
· Measurement conditions
Wavenumber range: 650 cm⁻¹ to 4000 cm⁻¹
ATR unit: Goldengate (Ge crystal, incidence angle: 45°, single reflection) manufactured by Specac Ltd.
Measured area: approximately 5 mmϕ; measurement depth: approximately 1 µm from the measurement surface

### <Measurement>

The sample for measurement is fixed to a measurement table of the measurement device such that the cut surface is an irradiation surface of irradiation light (s-polarized light), and the measurement is performed. The measurement is performed as follows using the above-described measuring device and measuring conditions.

The sample for evaluation is irradiated with s-polarized light to obtain an IR spectrum in a case where the incident s-polarized light is parallel to the fiber direction of the sample for evaluation. Next, the sample for evaluation is rotated by 90°, and an IR spectrum in a case where the incident s-polarized light and the fiber direction of the sample for evaluation are perpendicular to each other is measured.

From the obtained IR spectra, a peak intensity of an amide I band and a peak intensity of an amide II band are specified for the case where the incident s-polarized light is parallel to the fiber direction of the sample for evaluation.

Similarly, a peak intensity of an amide I band and a peak intensity of an amide II band are specified for the case where the incident s-polarized light and the fiber direction of the sample for evaluation are perpendicular to each other is measured.

The amide I band is mainly a C=O stretching and contracting vibration of a secondary amide, and the amide II band is mainly an N-H angle deformation vibration and a C-N stretching and contracting vibration of a trans-type -CO-NH-. In the measurement of the present disclosure, the peak of the amide I band is observed at 1590 cm⁻¹ to 1700 cm⁻¹, and the peak of the amide II band is observed at 1490 cm⁻¹ to 1590 cm⁻¹.

### intensity ratio X_{A}, intensity ratio X_{B}, and alignment degree X_{A}/X_{B}>

From the peak intensity obtained from the area of the amide I band specified above and the peak intensity obtained from the area of the amide II band specified above, the intensity ratio X_{A}, the intensity ratio X_{B}, and the alignment degree X_{A}/X_{B} are calculated.

In the protein food material B according to the present disclosure, 1.005 ≤ X_{A}/X_{B} is satisfied, and 1.0745 ≤ X_{A}/X_{B} ≤ 1.102 is more preferable. The upper limit value of the alignment degree X_{A}/X_{B} is, for example, 1.5.

The measurement is performed for three points selected at random, the obtained values are arithmetically averaged, and a value rounded off to the first decimal place is used as the measured value.

The protein food material according to the present disclosure preferably has a surface appearance with many streak-like irregularities on the surface.

### (Application of protein food material)

The protein food material obtained by the production method according to the present disclosure may be used as it is, or as a mixture obtained by mixing the protein food material with a desired additive component, or may be used as one of materials for manufacturing a processed product such as an alternative restructured meat.

Examples of the additive component which is mixed with the protein food material include oil and fat, a coagulant, an enzyme, and other additives.

### - Oil and fat -

The lean-like portion included in the livestock meat has a lower content of oil and fat than the fat-like portion, but may contain a certain amount of oil and fat. Therefore, by combining the protein food material and the oil and fat, it is easy to obtain a state similar to the composition of the lean meat of the livestock meat and a texture closer to the lean meat of the livestock meat.

The oil and fat is preferably a vegetable oil.

Since the vegetable oil is derived from a plant, it can be easily used even in a case where it is necessary to avoid or restrict intake of animal-derived food for reasons such as health, animal welfare, religion, allergy, and food crisis due to population increase.

A content of the oil and fat is preferably 0% by mass or more and 50% by mass or less, more preferably 1% by mass or more and 40% by mass or less, and still more preferably 3% by mass or more and 30% by mass or less with respect to the entire mixture containing the protein food material and the oil and fat.

Unlike a fat-like portion of the livestock meat, the oil and fat may be contained in the entire mixture containing the protein food material and the oil and fat with high uniformity, and not have an appearance similar to fat of a chunk of meat.

### - Coagulant and enzyme -

The protein food material is also preferably mixed with at least one selected from the group consisting of a coagulant and an enzyme which hardens the protein, as necessary.

By containing the protein food material and at least one selected from the group consisting of a coagulant and an enzyme which hardens the protein, it is easy to maintain the protein food material in one lumped shape.

The coagulant is not particularly limited as long as it is edible and can maintain the shape of the protein food material.

Examples of the coagulant include a protein, thickening polysaccharides, and starch. The coagulant may be contained alone or in combination of two or more kinds thereof.

The protein used as the coagulant may be the same as or different from the protein contained in the protein food material.

Examples of the protein which is used as the coagulant include a vegetable protein and an animal protein.

Examples of the vegetable protein which is used as the coagulant include a protein of which the origin is wheat, soybean, rice, or the like.

Examples of the animal protein which is used as the coagulant include a milk protein and an egg white protein.

Here, as the enzyme which hardens the protein, it is preferable to use transglutaminases.

As the transglutaminase, a commercially available product can be used, and examples thereof include ACTIVA (registered trade name) series manufactured by Ajinomoto Co., Inc.

Examples of the thickening polysaccharides include agar, carrageenan (κ-carrageenan, 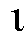 -carrageenan), alginic acid, alginate, agarose, furcelleran, gellan gum, gluconodeltalactone, azotobacter vinelandii gum, xanthan gum, pectin, guar gum, locust bean gum, tara gum, cassia gum, glucomannan, tragacanth gum, karaya gum, pullulan, gum arabic, arabinogalactan, dextran, carboxymethyl cellulose sodium salt, methyl cellulose, psyllium seed gum, starch, chitin, chitosan, curdlan, tamarind seed gum, soybean polysaccharide, gelatin, psyllium, hydroxypropyl methyl cellulose, hydroxyethyl cellulose, carboxymethyl cellulose, and dextrin.

The thickening polysaccharides may be used as a gelling agent, or may be a gelled product.

It is preferable that the gelling agent is used in combination with a gelation promoting agent.

The gelation promoting agent is a compound which promotes gelation by coming into contact with the gelling agent, and the function of the gelation promoting agent is exhibited by a specific combination with the gelling agent.

A preferred combination of the gelling agent and the gelation promoting agent is as follows.
1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent,
2) A combination of boric acid or a boron compound as the gelation promoting agent, and guar gum, locust bean gum, tara gum, cacia gum, or the like as the gelling agent,
3) A combination of an acid or an alkali as the gelation promoting agent, and alginate, glucomannan, pectin, chitin, chitosan, curdlan, or the like as the gelling agent,
4) Water-soluble polysaccharides which react with the gelling agent to form a gel is used as the gelation promoting agent; specific examples thereof include a combination in which xanthan gum is used as the gelling agent and cacia gum is used as the gelation promoting agent, and a combination in which carrageenan is used as the gelling agent and locust bean gum is used as the gelation promoting agent.

From the viewpoint of obtaining an appearance and a texture similar to those of the livestock meat, the combination of the gelling agent and the gelation promoting agent is preferably the above-described "1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent".

The thickening polysaccharides used as the coagulant may be thermally irreversible gel-forming polysaccharides or thermally reversible gel-forming polysaccharides.

The thermally irreversible gel is a gel which maintains a gel state even in a case of being heated, after the gel is once formed. The thermally irreversible gel-forming polysaccharides are polysaccharides which form the thermally irreversible gel.

The thermally irreversible gel-forming polysaccharides are preferably polysaccharides which is crosslinked by a reaction with a cation. Examples of the cation include cations exemplified in the description of a fat mass composition later. Examples of the thermally irreversible gel-forming polysaccharides include alginic acid, carrageenan, pectin (low-methoxyl (LM) pectin, high-methoxyl (HM) pectin, and the like), and low-acyl (LA) gellan gum.

The thermally reversible gel-forming polysaccharides are polysaccharides which form a thermal reversible gel. Examples of the thermally reversible gel-forming polysaccharides include gelatin, agar, carrageenan, furcelleran, native gellan gum, locust bean gum, xanthan gum, guar gum, psyllium seed gum, glucomannan, tara gum, and tamarind seed gum.

In a case where the coagulant contains the thermally irreversible gel-forming polysaccharides or the thermally reversible gel-forming polysaccharides, the coagulant may further contain a gelation retardant. The gelation retardant is a compound which has an action of inhibiting gelation of the thermally irreversible gel-forming polysaccharides or the thermally reversible gel-forming polysaccharides. The gelation retardant is preferably a chelating agent.

As the chelating agent, a known chelating agent can be suitably used. Examples of the chelating agent include an oxycarboxylic acid such as tartaric acid, citric acid, a gluconic acid; an aminocarboxylic acid such as iminodiacetic acid (IDA), nitrilotriacetic acid (NTA), and ethylenediaminetetraacetic acid (EDTA); a condensed phosphoric acid such as pyrophosphoric acid and tripolyphosphoric acid; and a salt thereof.

Examples of the starch include wheat starch, cassava starch, rice starch, glutinous rice starch, corn starch, waxy corn starch, sago starch, potato starch, arrowroot starch, lotus root starch, mung bean starch, sweet potato starch, waxy potato starch, waxy cassava starch, and waxy wheat starch.

The total content of the coagulant and the enzyme which hardens the protein, contained in the protein food material, is preferably 0.1% by mass or more and 30% by mass or less, more preferably 0.5% by mass or more and 25% by mass or less, and still more preferably 1% by mass or more and 20% by mass or less with respect to the entire protein food material.

### - Other additives -

The protein food material may be mixed with other additives as necessary.

Examples of the other additives include water, a seasoning, an acidulant, a bittering agent, a spice, a sweetener, an antioxidant, a color developing agent, a flavoring agent, a stabilizer, and a preservative.

A content of the other additives is preferably 0% by mass or more and 20% by mass or less with respect to the entire mixture containing the protein food material and the additive.

### <Alternative restructured meat>

As one of suitable application forms of the protein food material obtained by the production method according to the present disclosure, there is an alternative restructured meat containing the protein food material. By containing the protein food material according to the present disclosure, the alternative restructured meat has an excellent meaty appearance. It is preferable that the alternative restructured meat is an alternative restructured meat for a chunk of meat (hereinafter, also referred to as "alternative meat for a chunk of meat"). Since the protein food material obtained by the production method according to the present disclosure has an excellent meaty appearance, the alternative meat for a chunk of meat according to the present disclosure can have an appearance similar to the "chunk of meat" of the livestock meat.

The chunk of meat preferably has, on a surface thereof, a lean-like portion having a color close to red and a fat-like portion having a color close to white. In addition, the fat on the surface of the chunk of meat has a certain area (for example, in a chunk of meat of a part with little fat, such as beef fillet, the area of the fat on the surface of the chunk of meat is approximately 3%). In addition, the fat often has an elongated shape on the surface of the chunk of meat.

From the viewpoint of improving taste and texture of the alternative restructured meat, the alternative restructured meat preferably contains the protein food material and the oil and fat, and more preferably contains the protein food material, the oil and fat, and the polysaccharides. In a certain aspect, the oil and fat contained in the protein food material may be a granular body containing the oil and fat. The granular body containing the oil and fat may have a form such as a capsule-like oil and fat and an oil and fat encapsulated in a gel.

An average particle diameter of the granular body may be 10 µm or more and 500 µm or less. The average particle diameter of the granular body is a value measured by observing the granular body with a transmission optical microscope.

The polysaccharides can function as a coagulant between the protein food material and the granular body containing the oil and fat. Examples of the polysaccharides include the above-described thickening polysaccharides which may be contained in the protein food material as a coagulant.

Hereinafter, a meat substitute, which is one of the application forms of the protein food material obtained by the production method according to the present disclosure, will be described using the alternative meat for a chunk of meat as an example.

### (Lean-like portion)

The lean-like portion refers to a portion corresponding to a portion which appears as lean in the chunk-like meat substitute.

The lean-like portion has an appearance similar to that of the lean of the chunk meat.

The lean-like portion preferably contains the protein food material obtained by the production method according to the present disclosure, and contains an oil and fat, a coagulant, and other additives as necessary.

The details of the oil and fat, the coagulant, and the other additives are as described above, and the description thereof will be omitted here.

The lean-like portion may be colored red using a colorant.

The colorant used for the coloration of the lean-like portion is preferably an edible red colorant. From the viewpoint that the lean-like portion exhibits a red color before heating cooking and exhibits a color close to brown after the heating cooking, it is preferable that the edible red colorant has a property of fading by heating. Examples of the red colorant include a natural beet red coloring agent, a cochineal coloring agent, and a gardenia red coloring agent, and among these, a natural beet red coloring agent is preferable.

From the viewpoint of improving the taste and texture of the meat substitute, the lean-like portion may contain the protein food material and the oil and fat. In a certain aspect, the oil and fat contained in the protein food material may be in a form of a capsule-like oil and fat. The polysaccharides can function as a coagulant between the protein food material and the capsule-like oil and fat.

Examples of the capsule-like oil and fat include microcapsules encapsulating edible oil and fat.

Examples of the microcapsule encapsulating edible oil and fat include edible oil-encapsulating microcapsules having a core portion containing edible oil and fat and a shell portion encapsulating the core portion and containing an edible and ionically cross-linkable polymer cross-linked with a polyvalent cation.

The edible oil and fat contained in the core portion is preferably an edible oil and fat having a melting point of 30°C or lower, and may be a natural oil, a synthetic oil, or a mixture thereof. The edible oil and fat is preferably a saturated fatty acid or an unsaturated fatty acid, more preferably a saturated fatty acid having 12 to 30 carbon atoms or an unsaturated fatty acid having 12 to 30 carbon atoms, and still more preferably an unsaturated fatty acid having 16 to 24 carbon atoms. Examples of the unsaturated fatty acid having a melting point of 30°C or lower include triglycerides of medium-chain fatty acids having 6 to 12 carbon atoms (medium-chain fatty acid triglycerides), such as caproic acid, caprylic acid, capric acid, and lauric acid; vegetable oils such as coconut oil, sesame oil, olive oil, corn oil, rapeseed oil, safflower oil, soybean oil, sunflower oil, nut oil, grapeseed oil, and linseed oil; and Vitamin E.

The core portion may contain water and other components as necessary, in addition to the above-described edible oil and fat. Examples of the other components include an amino acid, a stabilizer, an excipient, and a flavoring agent.

It is preferable that the shell portion encapsulates the core portion and contains an edible and ionically cross-linkable polymer cross-linked with a polyvalent cation.

As the edible and ionically cross-linkable polymer cross-linked with a polyvalent cation, a known ionically cross-linkable polymer crosslinkable with a polyvalent cation can be used. The ionically cross-linkable polymer is not particularly limited as long as it can be used in foods, and examples thereof include pectin or a derivative thereof, alginic acid or a salt thereof, gellan gum, carrageenan, polygalacturonic acid, and a mixture thereof.

The shell portion may contain a component other than the ionically cross-linkable polymer, and examples of other components include a thickener of polysaccharides other than carrageenan and pectin, such as gellan gum, and a plasticizer for imparting flexibility in a dry state.

The microcapsule encapsulating the edible oil and fat may have a number-average particle diameter of 10 µm or more and 300 µm or less. In addition, a coefficient of variation (CV value) of the above-described number-average particle diameter is also preferably 30% or less.

The edible oil-encapsulating microcapsule can be produced, for example, by a production method including: a step of obtaining an oil-in-water droplet dispersion liquid using a water phase containing an edible and ionically cross-linkable polymer and a chelate compound of a polyvalent cation and an oil phase containing an edible oil and fat having a melting point of 30°C or lower; a step B of mixing the oil-in-water droplet dispersion prepared in the step A with an edible oil and fat to obtain an oil-in-water-in-oil droplet dispersion liquid in which oil-in-water droplets are dispersed in the edible fats and oil; and a step C of obtaining a mixed liquid of the oil-in-water-in-oil droplet dispersion liquid prepared in the step B and an edible oil and fat containing a pH lowering agent.

### (Fat-like portion)

The fat-like portion refers to a portion having an appearance similar to that of the fat of the chunk of meat (generally, a part also referred to as a fat).

The fat-like portion preferably contains an oil and fat, and a gel as necessary.

### - Oil and fat -

Examples of the oil and fat include a vegetable oil and fat and an animal oil and fat.

Examples of the vegetable oil and fat include rapeseed oil, soybean oil, palm oil, olive oil, rice oil, corn oil, and coconut oil. The vegetable oil and fat refers to an oil and fat obtained from a plant.

Examples of the animal oil and fat include beef tallow, pork lard, whale oil, and fish oil. The animal oil and fat refers to an oil and fat obtained from an animal.

A range of a melting point of the oil and fat is not particularly limited, and may be, for example, 300°C or lower.

The melting point of the oil and fat is a value measured by a thermal analysis measuring device.

As the thermal analysis measuring device, for example, SSC5000 DSC200 manufactured by Seiko Instruments Inc. can be used.

The measurement of the melting point of the oil and fat is performed by adding 3 mg of a sample to the device and measuring the melting point at a temperature rising rate of 3 °C/min.

### - Emulsion -

It is also preferable that the oil and fat is contained in the fat-like portion in a form of an emulsion.

Here, in the present specification, the "emulsion" refers to a substance which contains oil and fat and water and is in an emulsified state such as an oil-in-water type emulsified substance or a water-in-oil type emulsified substance.

Examples of the oil and fat contained in the emulsion include the same as those described above.

A content of the oil and fat in the emulsion is preferably 5% by mass or more and less than 90% by mass, more preferably 10% by mass or more and 80% by mass or less, and still more preferably 15% by mass or more and 70% by mass or less with respect to the entire emulsion.

The water contained in the emulsion is not particularly limited as long as it is water which can be used in foods.

A content of the water in the emulsion is preferably 10% by mass or more and 95% by mass or less, more preferably 20% by mass or more and 90% by mass or less, and still more preferably 30% by mass or more and 85% by mass or less with respect to the entire emulsion.

The emulsion preferably contains thickening polysaccharides. By containing the thickening polysaccharides, water retention of the emulsion can be improved.

The thickening polysaccharides are not particularly limited, and the above-described thickening polysaccharides can be applied.

A content of the thickening polysaccharides in the emulsion is preferably 0.1% by mass or more and 5% by mass or less, and more preferably 0.5% by mass or more and 3% by mass or less with respect to the entire emulsion.

The emulsion preferably contains a protein. In a case where the emulsion contains a protein, adhesiveness between the lean-like portion and the fat-like portion is increased.

The protein is not particularly limited, and the above-described protein can be applied.

A content of the protein in the emulsion is preferably 0.1% by mass or more and 10% by mass or less, and more preferably 0.5% by mass or more and 5% by mass or less with respect to the entire emulsion.

The emulsion may contain a surfactant.

Examples of the surfactant contained in the emulsion include edible surfactants.

Examples of the edible surfactant include a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, and lecithin.

The glycerin fatty acid ester preferably contains monoglyceride as a main component.

The monoglyceride is preferably a monoesterified product of a saturated or unsaturated fatty acid having 2 or more and 24 or less carbon atoms and glycerin.

Examples of the fatty acid include behenic acid, stearic acid, and palmitic acid.

The glycerin fatty acid ester may contain diglyceride.

The diglyceride is preferably a diesterified product of a saturated or unsaturated fatty acid having 2 or more and 24 or less carbon atoms and glycerin.

The polyglycerin fatty acid ester is preferably an esterified product of a saturated or unsaturated fatty acid having 2 or more and 24 or less carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dimonooleate, and polyglyceryl trimonooleate.

The organic acid monoglyceride is obtained by further esterifying a hydroxyl group derived from glycerin of monoglyceride using an organic acid.

Examples of the organic acid include citric acid, succinic acid, acetic acid, and lactic acid, and citric acid or succinic acid is preferable and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having 2 or more and 18 or less carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan of Cocos nucifera oil fatty acid.

The propylene glycol fatty acid ester is an esterified product of a fatty acid and propylene glycol.

The fatty acid which is used for the synthesis of the propylene glycol fatty acid ester is preferably a saturated or unsaturated fatty acid having 2 or more and 24 or less carbon atoms.

Specific examples of the propylene glycol fatty acid ester include a propylene glycol palmitic acid ester, a propylene glycol stearic acid ester, and a propylene glycol behenic acid ester.

The sucrose fatty acid ester is an esterified product of sucrose and a fatty acid.

The fatty acid which is used for the synthesis of the sucrose fatty acid ester is preferably a saturated or unsaturated fatty acid having 2 or more and 24 or less carbon atoms.

The sucrose fatty acid ester is preferably an esterified product of one or two or more fatty acids selected from the group consisting of caprylic acid, capric acid, lauric acid, myristic acid, palmitic acid, palmitoleic acid, stearic acid, oleic acid, arachidic acid, and behenic acid, and sucrose.

The polyglycerin condensed ricinoleic acid ester is an esterified product of a polyglycerin fatty acid ester and a ricinoleic acid condensate.

Specific examples of the polyglycerin condensed linoleic acid ester include esterified products of a compound described as specific examples of the aforementioned polyglycerin fatty acid ester and a linoleic acid compound.

The lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, it is possible to use an enzymatically degraded lecithin (so-called lysolecithin).

The enzymatically degraded lecithin is a composition containing lysophosphatidylcholine in which one fatty acid of the phosphatidylcholine molecule is lost by an enzyme such as phospholipase. In the present disclosure, the enzymatically degraded lecithin includes so-called hydrogenated and enzymatically degraded lecithin, which has undergone a hydrogenation treatment to convert a bound fatty acid into a saturated fatty acid, thereby having improved oxidation stability.

From the viewpoint of emulsification dispersibility, an HLB value of the surfactant is, for example, preferably 8 or more, more preferably 10 or more, and still more preferably 12 or more.

The upper limit of the HLB value of the emulsifier is not particularly limited, but it is generally 20 or less and preferably 18 or less.

HLB generally means hydrophilic-hydrophobic balance, which is a term used in the field of surfactant. The HLB value is calculated using Kawakami equation shown below. In a case where a commercially available product is used as the surfactant, the commercially available catalog data is preferentially adopted.

HLB = 7 + 11.7 log(Mw/Mo)

Here, Mw represents a formula weight of a hydrophilic group included in the surfactant, and Mo represents a formula weight of a hydrophobic group included in the surfactant.

The hydrophobic group included in the surfactant is an atomic group having low affinity for water. Examples of the hydrophobic group include an alkyl group, an alkenyl group, an alkylsilyl group, and a perfluoroalkyl group. Specifically, the hydrophobic group refers to an alkyl group or an alkenyl group, which is derived from a fatty acid, in a case where the surfactant is "a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, or lecithin" described above.

The hydrophilic group included in the surfactant is an atomic group having a high affinity for water. Specifically, the hydrophilic group refers to an atomic group other than the hydrophobic group in a structure of the surfactant.

### - Gel -

From the viewpoint of maintaining the appearance similar to the chunk of meat and the viewpoint that a texture similar to the chunk of meat is easily obtained, it is preferable that the fat-like portion contains a gel even in a case where a temperature change or the like occurs, so that the oil and fat contained in the fat-like portion does not flow out.

In the present disclosure, the gel refers to a gel which contains at least water and exhibits behavior as an elastic solid.

The elasticity refers to a property of an object which has been deformed by receiving an external force and attempts to return to an original shape after the external force is removed.

The gel preferably contains an edible gelling agent.

Examples of the edible gelling agent include thickening polysaccharides.

Specific examples of the thickening polysaccharides include agar, carrageenan (κ-carrageenan, 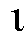 -carrageenan), alginic acid, alginate, agarose, furcelleran, gellan gum, gluconodeltalactone, azotobacter vinelandii gum, xanthan gum, pectin, guar gum, locust bean gum, tara gum, cassia gum, glucomannan, tragacanth gum, karaya gum, pullulan, gum arabic, arabinogalactan, dextran, carboxymethyl cellulose sodium salt, methyl cellulose, psyllium seed gum, starch, chitin, chitosan, curdlan, tamarind seed gum, soybean polysaccharide, gelatin, psyllium, hydroxypropyl methyl cellulose, hydroxyethyl cellulose, carboxymethyl cellulose, and dextrin.

It is preferable that the gelling agent is used in combination with a gelation promoting agent.

The gelation promoting agent is a compound which promotes gelation by coming into contact with the gelling agent, and the function of the gelation promoting agent is exhibited by a specific combination with the gelling agent.

Preferred combinations of the gelling agent and the gelation promoting agent are as follows.
1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent
2) A combination of boric acid or a boron compound as the gelation promoting agent, and guar gum, locust bean gum, tara gum, cacia gum, or the like as the gelling agent
3) A combination of an acid or an alkali as the gelation promoting agent, and alginate, glucomannan, pectin, chitin, chitosan, curdlan, or the like as the gelling agent
4) Water-soluble polysaccharides which react with the gelling agent to form a gel is used as the gelation promoting agent; specific examples thereof include a combination in which xanthan gum is used as the gelling agent and cacia gum is used as the gelation promoting agent, and a combination in which carrageenan is used as the gelling agent and locust bean gum is used as the gelation promoting agent.

From the viewpoint of obtaining a chunk-like meat substitute having an appearance and a texture similar to those of the livestock meat, the combination of the gelling agent and the gelation promoting agent is preferably the above-described "1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent".

### - Component aspect contained in fat-like portion -

The fat-like portion is preferably any one of the following component aspects.
(1) The fat-like portion contains an oil and fat as a main component.
(2) The fat-like portion contains an emulsion as a main component.
(3) The fat-like portion contains an oil and fat and a gel.

Here, the "main component" means that the corresponding component is contained in an amount of 90% by mass or more with respect to the entire fat-like portion.

(1) Case in which fat-like portion contains oil and fat as main component (hereinafter, fat-like portion example (1))

In a case where the fat-like portion is in the "fat-like portion example (1)", a content of the oil and fat contained in the fat-like portion is preferably 90% by mass or more, more preferably 92% by mass or more, and still more preferably 95% by mass or more with respect to the entire fat-like portion.

In a case where the fat-like portion is in the "fat-like portion example (1)", the upper limit of the content of the oil and fat contained in the fat-like portion may be 99% by mass or less, or 98% by mass or less with respect to the entire fat-like portion, in consideration of the additive and the like contained in the oil and fat.

In a case where the fat-like portion is in the "fat-like portion example (1)", from the viewpoint of obtaining chunk-like meat substitute having an appearance similar to that of the livestock meat, it is preferable to use an oil and fat which is turbid in a case of being solidified.

Specifically, as the oil and fat used in the case where the fat-like portion is in the "fat-like portion example (1)", coconut oil, palm oil, shea butter, cocoa butter, or the like is preferable.

(2) Case in which fat-like portion contains emulsion as main component (hereinafter, fat-like portion example (2))

Since the emulsion often exhibits a white color, the fat-like portion is also likely to exhibit a white color by containing the emulsion as a main component. Therefore, by adopting the aspect of the fat-like portion example (2) as the fat-like portion, the fat-like portion has an appearance closer to that of the livestock meat, and thus the fat-like portion is to be a chunk-like meat substitute.

The emulsion may be an oil-in-water type emulsion or a water-in-oil type emulsion.

In a case where the fat-like portion is in the "fat-like portion example (2)", a content of the emulsion is preferably 90% by mass or more, more preferably 92% by mass or more, and still more preferably 95% by mass or more with respect to the entire fat-like portion.

In a case where the fat-like portion is in the "fat-like portion example (2)", the upper limit of the content of the emulsion contained in the fat-like portion may be 99% by mass or less, or 98% by mass or less with respect to the entire fat-like portion, in consideration of the additive and the like.

A content of the oil and fat contained in the emulsion is preferably 5% by mass or more and less than 90% by mass, more preferably 10% by mass or more and 80% by mass or less, and still more preferably 15% by mass or more and 70% by mass or less with respect to the entire emulsion.

A content of water contained in the emulsion is preferably 10% by mass or more and 95% by mass or less, more preferably 20% by mass or more and 90% by mass or less, and still more preferably 30% by mass or more and 85% by mass or less with respect to the entire emulsion.

A content of the surfactant contained in the emulsion is preferably 0.01% by mass or more and 5% by mass or less, more preferably 0.05% by mass or more and 4% by mass or less, and still more preferably 0.1% by mass or more and 3% by mass or less with respect to the entire emulsion.

(3) Case in which fat-like portion contains oil and fat and gel (hereinafter, fat-like portion example (3))

In a case where the fat-like portion contains the oil and fat and the gel, the oil and fat contained in the fat-like portion is easily retained by the gel even in a case where a temperature change or the like occurs. Therefore, even in a case where the temperature change occurs, the oil and fat is less likely to flow out from the fat-like portion, and the appearance similar to the chunk of meat is more likely to be maintained. In addition, even in a case where the raw chunk-like meat substitute is heated and cooked, the oil and fat is easily retained by the gel, and in a case where the raw chunk-like meat substitute is eaten after the cooking, the oil and fat contained in the fat-like portion overflows, and the texture similar to the chunk of meat is easily obtained after the cooking.

From the viewpoint that it is difficult for the oil and fat to flow out from the fat-like portion, in a case where the fat-like portion is the aspect of the fat-like portion example (3), it is preferable that the oil and fat is encapsulated in the gel.

In a case where the oil and fat is encapsulated in the gel, the oil and fat is preferably present in a state of a granular body containing the oil and fat, specifically, in a state close to a spherical state (hereinafter, referred to as "oil droplet") in a large number in the gel.

A particle size of the oil droplet is preferably 20 µm or more and 500 µm or less, more preferably 30 µm or more and 400 µm or less, and still more preferably 50 µm or more and 300 µm or less.

Since the oil and fat is encapsulated in the gel, even in a case where the raw chunk-like meat substitute is heated and sterilized after the raw chunk-like meat substitute is formed, it is possible to suppress the oil and fat contained in the fat-like portion from being dissolved and flowing down from the fat-like portion. Therefore, even in a case where the raw chunk-like meat substitute is heated and sterilized, the fat-like portion can be maintained, and storage stability of the chunk-like meat substitute can be improved.

The particle size of the oil droplet is measured by observing the fat-like portion with a transmission optical microscope.

As the transmission microscope, it is possible to use, for example, an inverted microscope Axio Observer. Z 1 or the like.

Hereinafter, a procedure for measuring the particle size of the oil droplet will be described.

The oil droplets are collected from the fat-like portion by dissolving the gel with 3% sodium carbonate or the like in a state in which the oil and fat is solidified at a temperature equal to or lower than the melting point of the oil and fat, and the oil droplets are placed in a polystyrene petri dish having a diameter of 60 mmϕ. In this case, the collected oil droplets are not overlapped in a depth direction of the petri dish. The oil droplets collected in the petri dish are observed with a transmission optical microscope, and imaged at an objective magnification of 5 times.

200 or more images of the oil droplets included in the screen obtained by the imaging are selected, and an equivalent circle diameter of each oil droplet (true diameter of a true circle corresponding to the area of the images of the oil droplets) is calculated by image processing software (for example, Image J). An arithmetic mean value of the calculated equivalent circle diameters of the respective oil droplets is calculated, and defined as the particle size of the oil droplets.

In a case where the fat-like portion contains the oil and fat encapsulated in the gel, it is preferable that transparency of the fat-like portion is improved by heating.

The fat contained in the chunk of meat is in a state close to white in a non-heated state, but the transparency is increased in a case of performing a heat cooking. Therefore, by using the chunk-like meat substitute according to the present embodiment with the configuration, in a case where the raw chunk-like meat substitute is heat-cooked, the chunk-like meat substitute has an appearance close to that of the livestock meat.

Whether or not the transparency of the fat-like portion is improved by the heating is determined by the following procedure.

The transparency of the fat-like portion in the raw chunk-like meat substitute is measured using a color reader CR-10Plus manufactured by Konica Minolta, Inc. at any three points with the points changed, and an arithmetic mean value of the obtained values is defined as a measured value A. The surface of the raw chunk-like meat substitute is heated by placing the surface of the raw chunk-like meat substitute on a hot plate with a temperature of 160°C and allowing the meat substitute to stand for 2 minutes. The heated raw chunk-like meat substitute is taken out from the hot plate, and the transparency of the measurement portion is measured after the heating by the same procedure as the measured value A, and an arithmetic average value of the obtained values is defined as a measured value B. In a case where the measured value B shows a result of a higher transparency than the measured value A, it is determined that the fat-like portion is heated with improved transparency.

In a case where the fat-like portion is in the "fat-like portion example (3)", a content of the oil and fat is preferably 10% by mass or more and 70% by mass or less, more preferably 15% by mass or more and 60% by mass or less, and still more preferably 20% by mass or more and 50% by mass or less with respect to the entire fat-like portion.

In a case where the fat-like portion is in the "fat-like portion example (3)", a content of the gel is preferably 30% by mass or more and 90% by mass or less, more preferably 40% by mass or more and 85% by mass or less, and still more preferably 50% by mass or more and 80% by mass or less with respect to the entire fat-like portion.

In a case where the fat-like portion is in the "fat-like portion example (3)", the fat-like portion may be in a form of containing a fat mass composition containing a granular body containing oil and fat, and an edible and ionically cross-linkable polymer cross-linked with a cation.

Here, as the oil and fat contained in the fat mass composition, the same oil and fat as those described above can be used.

An average particle diameter of the granular body may be 50 µm or more and 500 µm or less.

The average particle diameter of the granular body is a value measured by observing the fat mass composition with a transmission optical microscope.

The fat mass composition preferably contains an edible and ionically cross-linkable polymer cross-linked with a cation. Here, the "edible" means having a property which does not adversely affect a health condition in a case where a substance is orally subjected to dietary intake by a human.

The "ionically cross-linkable polymer" means a polymer which is cross-linked by a reaction with an ion.

Examples of the edible and ionically cross-linkable polymer include alginic acid, carrageenan, LM pectin, HM pectin, and LA gellan gum.

From the viewpoint of improving heat resistance of the fat mass composition, the edible and ionically cross-linkable polymer is preferably at least one selected from the group consisting of alginic acid, LM pectin, and LA gellan gum.

The cation is preferably a metal ion having an ion valence of 2 or more.

Examples of the metal ion include divalent metal ions such as a calcium ion, a magnesium ion, an iron ion (II), a copper ion (II), a zinc ion, and a manganese ion; and trivalent metal ions such as an aluminum ion and an iron ion (III).

From the viewpoint of obtaining a stable crosslinking structure, the metal ion is preferably at least one selected from a calcium ion, a magnesium ion, or a zinc ion, and more preferably a calcium ion.

The edible and ionically cross-linkable polymer can be cross-linked, for example, by mixing a solution containing the ionically cross-linkable polymer, a surfactant, and water (ionically cross-linkable polymer solution) with an aqueous solution containing a cation.

The fat mass composition can be produced, for example, according to aspects described in Examples later.

The raw chunk-like meat substitute may contain a granular body containing oil and fat inside (an oil and fat encapsulated in a gel, or a capsule-like oil and fat).

Here, the "inside" means that the substance is not present on the surface of the chunk-like meat substitute.

The oil and fat is easily retained in the chunk-like meat substitute by containing the oil and fat encapsulated in the gel or the capsule-like oil and fat inside the raw chunk-like meat substitute. As a result, it is easy to obtain a raw chunk-like meat substitute having a texture closer to the texture of the livestock meat.

Here, examples of the granular body containing oil and fat, which is contained inside the raw chunk-like meat substitute, include the same as the oil and fat encapsulated in a gel or the capsule-like oil and fat described above, and the description thereof will be omitted here.

### <Method for manufacturing alternative restructured meat>

A method for manufacturing the alternative restructured meat according to the present disclosure is not particularly limited, and preferred examples thereof include a method including forming a lean-like portion having a red color and forming a groove on a surface of the formed lean-like portion, or forming a groove on a surface of a lean-like portion while forming the lean-like portion having a red color (lean-like portion-forming step); and then forming a fat-like portion by adhering oil and fat to the groove (fat-like portion-forming step).

### <Method for manufacturing alternative restructured meat>

A method of manufacturing the alternative restructured meat according to the present disclosure is not particularly limited.

Examples of an aspect of the method for manufacturing the alternative restructured meat according to the present disclosure include a method including forming a lean-like portion having a red color and forming a groove on a surface of the formed lean-like portion, or forming a groove on a surface of a lean-like portion while forming the lean-like portion having a red color (lean-like portion-forming step); and then forming a fat-like portion by adhering oil and fat to the groove (fat-like portion-forming step).

In addition, examples of another aspect of the method for manufacturing the alternative restructured meat according to the present disclosure include a method including a first step of mixing the protein food material according to the present disclosure with a coagulant (for example, polysaccharides) to obtain a mixture; and a second step of stretching the mixture to obtain a stretched mixture in which a fiber direction of the protein food material is aligned in one direction.

In the above-described first step, a method of mixing the protein food material according to the present disclosure with the coagulant is not particularly limited, and examples thereof include a method of mixing by hand and a method of using a known mixing machine. Examples of the mixing machine include a mixer.

It is preferable to crush the protein food material with hands or the like to adjust the size of the protein food material before mixing the protein food material with the coagulant.

In addition, in a case where the alternative restructured meat to be manufactured contains oil and fat, the above-described fat mass composition, or other additives, it is preferable that the component is mixed with the protein food material and the coagulant in the first step.

In the above-described second step described above, a method of stretching the mixture obtained in the first step (hereinafter, also referred to as "first-step mixture") is not particularly limited as long as the stretched mixture in which the fiber direction of the protein food material is aligned in one direction is obtained.

It is preferable that the method further includes, after the second step, a third step of forming the stretched mixture to obtain a formed body, and then heating the formed product to harden the formed product.

By heating the formed body, for example, in a case of containing thermally irreversible gel-forming polysaccharides as the binding agent, formation of a gel containing the thermally irreversible gel-forming polysaccharides is promoted. As a result, the formed body is hardened, and the shape of the alternative restructured meat is more easily maintained.

The third step may include a step of, after obtaining the formed body by forming the stretched mixture, forming a pattern similar to fat (marbling pattern) on the surface of the formed body, for the purpose of making the appearance of the alternative restructured meat (specifically, the chunk-like meat substitute) closer to the appearance of the livestock meat (hereinafter, also referred to a fat-like portion-forming step).

The fat-like portion-forming step is preferably a step of forming, on the surface of the formed body, a groove having, for example, a depth of 100 µm or more and adhering oil and fat to the formed groove to form a fat-like portion.

Examples of a method of forming the groove on the surface of the formed body include a method of digging the surface with a blade and a method of forming the groove using a mold, and a method of forming the groove using a mold is preferable.

Subsequently, the oil and fat is adhered to the groove formed on the surface of the formed body to fill the groove, thereby forming a pattern similar to the fat.

In a case where the oil and fat is adhered to the groove formed on the surface of the formed body, a property of the oil and fat may be any of a liquid state, a semi-solid state in which a liquid and a solid are mixed, or a solid state, but is preferably a liquid state or a semi-solid state.

In a case where the oil and fat is adhered to the groove formed on the surface of the formed body, the oil and fat may be adhered in a state of an emulsion.

In a case where the oil and fat is adhered in a state of an emulsion, it is preferable that an emulsion containing a gelling agent, the oil and fat, and water (referred to as "emulsifier for gelling") is adhered to the groove formed on the surface of the formed body, and then the emulsifier for gelling, adhered to the groove, is gelled.

The emulsion for gelling is preferably an oil-in-water type emulsion.

An oil droplet size of the oil droplet in the emulsion for gelling is preferably 20 µm or more and 500 µm or less, more preferably 30 µm or more and 400 µm or less, and still more preferably 50 µm or more and 300 µm or less.

Examples of a method of gelating the emulsion for gelling adhering to the groove include a method of gelating the formed body to which the emulsion for gelling adheres in an aqueous solution containing a gelation promoting agent.

### Examples

Examples will be described below, but the present disclosure is not limited to these examples.

### [Example 1]

Defatted soybean flour (SHOWA FRESH RF, manufactured by Showa Sangyo Co., Ltd.; in Table 1 described as defatted soybean protein) as a protein and wheat gluten (PRO-GLU 65, manufactured by THE TORIGOE Co., Ltd.) as a protein were mixed in an amount (mass ratio) shown in Table 1 to obtain a mixed powder 1.

The defatted soybean flour used contained 54.7% by mass of protein.

Next, a two-axis extruder (biaxial extruder, manufactured by kohwakougyou inc., product name: KEI-45-25) was prepared. The biaxial extruder had a cross section schematically shown in Fig. 1A.

A cooling die (slit shape; concentric circle shape (inner circle diameter: 29 mm, outer circle diameter: 35 mm), lip clearance: 3 mm; jetting die) having a length of 300 mm in the extrusion direction was attached to the jetting part of the above-described two-axis extruder in which a screw length was 1100 mm and the highest temperature of the screw tip part was set to 155°C, and an outlet temperature of the cooling die was stabilized at 120°C. The mixed powder 1 was introduced into the above-described two-axis extruder at 530 g/min, and kneaded by pressurizing and heating the protein-containing mixture while adding water with a mass ratio shown in Table 1 to the extruder, and the mixture was jetted from an outlet of the cooling die at a jetting amount of 45 kg/hr at a screw rotation speed of 250 revolutions per minute (rpm). In this manner, a protein food material 1 was obtained.

### [Examples 2 and 3 and Comparative Examples 1 to 3]

Protein food materials 2 to 3 of Examples and protein food materials C1 to C3 of Comparative Examples were obtained in the same manner as in Example 1, except that, in Example 1, the outlet temperature of the cooling die was changed to the temperature shown in Table 1.

### [Example 4]

A protein food material 4 of Example was obtained in the same manner as in Example 1, except that, in Example 1, the mass of the raw material containing a protein (the defatted soybean flour and the wheat gluten) was changed to the mass ratio shown in Table 1, a colorant (manufactured by Kobe Chemical Co.,Ltd., KC-Brown SP-3, brown) was added thereto with the mass ratio shown in Table 1, and the outlet temperature of the cooling die was changed to the temperature shown in Table 1.

### [Example 5]

A protein food material 5 of Example was obtained in the same manner as in Example 1, except that, in Example 1, the length of the cooling die in the extrusion direction was changed as shown in Table 1.

### [Measurement and evaluation]

### <Proportion of number of voids>

### - Formation of cross section -

Each of the protein food materials 1 to 5 and C1 to C3, obtained in Examples and Comparative Examples, was gripped at an end part with both hands, and the protein food material was torn in a direction in which the protein food material could be torn to obtain a torn piece. A fiber direction was determined from the obtained torn piece by the above-described method.

### - Drying treatment -

The protein food materials 1 to 5 and C1 to C3, in which the fiber direction was determined, were allowed to stand in a vacuum oven (product name: VOS-201SD, manufactured by EYELA) connected to a vacuum pump (product name: GCD-051XF, manufactured by ULVAC, Inc.), and put into a vacuum state by the vacuum pump, followed by drying for 17 hours under conditions of 60°C.

### - Measurement of proportion of number of voids -

The protein food materials 1 to 5 and C1 to C3, in which the fiber direction was determined and subjected to the drying treatment, were cut using a cutting unit in a direction orthogonal to the fiber direction using a single-edged razor blade to form a cut surface, thereby obtaining a sample for measurement.

Using an optical microscope (product name: VHX-5000, manufactured by KEYENCE CORPORATION) to which a zoom lens (product name: VH-ZST, manufactured by KEYENCE CORPORATION) was attached, the obtained cross section was observed with an objective lens (product name: ZS-20, manufactured by KEYENCE CORPORATION) at a lens magnification of 30 times.

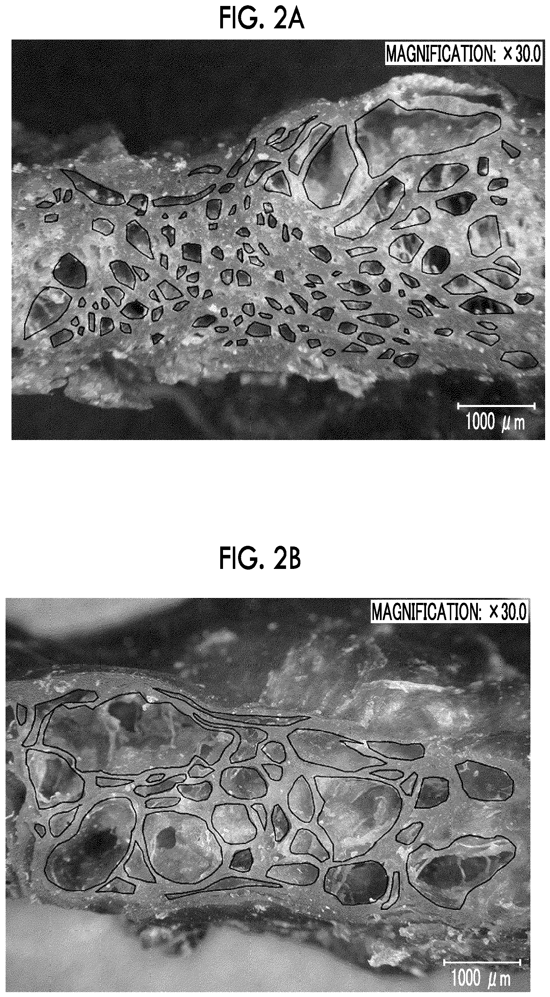

With regard to all voids detected in the observed cut surface, an edge of a void was outlined in a polygonal mode using an area measurement function of the optical microscope: VHX-5000, and the size of the void was detected to calculate a cross-sectional area (mm²) of each void. Fig. 2A shows an image of a cross section of the protein food material 2 of Example 2, and Fig. 2B shows an image of a cross section of the protein food material C3 of Comparative Example 3. Figs. 2A and 2B are images showing the edge of the voids.

Based on the obtained cross-sectional area, a proportion (%) of the number of voids having a cross-sectional area of 0.1 mm² or less with respect to the total number of voids present in the cross section was calculated.

The proportion (%) of the number of voids was measured twice for each of the protein food materials 1 to 5 and C2 and C3, and an average value of the obtained proportions (%) of the number of voids for each protein food material was defined as the proportion (%) of the number of voids of the protein food material. The results are shown in Table 1.

In the protein food material 1 of Comparative Example 1, since burning occurred and it was difficult to measure the voids, it is indicated as "-" in Table 1.

### <Alignment degree X_{A}/X_{B} of fibrous region>

For each of the protein food materials 1 to 5 and C2 and C3, obtained in Examples and Comparative Examples, polarization ATR-IR was measured at three points by the above-described measuring method, and intensity ratios X_{A} and X_{B} were calculated from an average value of the obtained peak intensity measurement results. Next, an alignment degree X_{A}/X_{B} of the fibrous region was calculated from the values of the intensity ratios X_{A} and X_{B}. The results are shown in Table 1.

Table 2 shows the peak intensities of the amide I band and the amide band II of the protein food materials 1 to 5 and C2 and C3, and the intensity ratio X_{A} and the intensity ratio X_{B}.

In the protein food material C1 of Comparative Example 1, since burning occurred and it was difficult to measure the alignment degree X_{A}/X_{B}, it is indicated as "-" in Table 1.

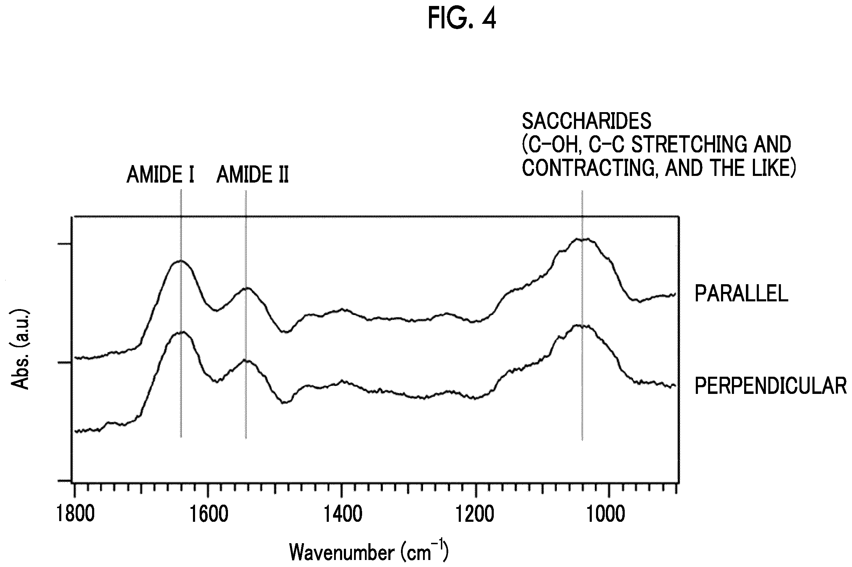

Fig. 4 shows an IR spectrum in a case where the protein food material 4 obtained in Example 4 was irradiated with s-polarized light in parallel and perpendicular to the fiber direction.

### <Evaluation>

### (Meaty appearance)

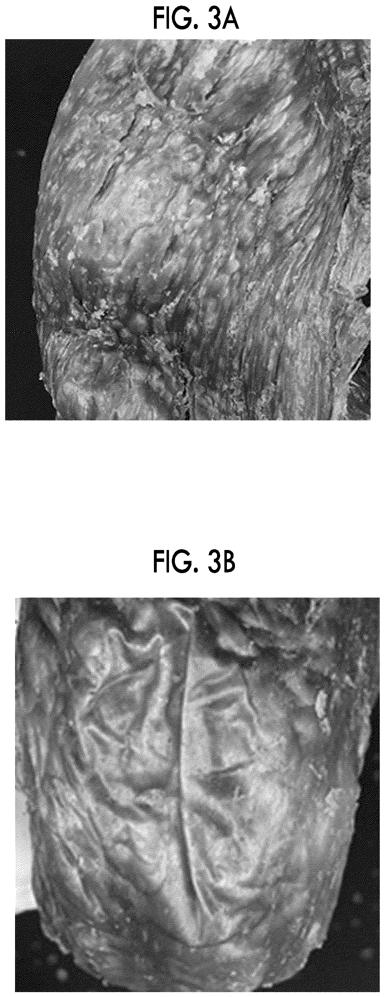

Meaty appearance of the protein food materials 1 to 5 and C1 to C3 before the above-described drying treatment was evaluated by visual observation by 10 evaluators. The evaluation was performed by observing a fibrous appearance on the surface of each protein food material. The evaluation points are shown below. The evaluation results were obtained by averaging evaluation points of the 10 evaluators and rounding off the value to the first decimal place. Fig. 3A shows an image of a surface of the protein food material 2 of Example 2, and Fig. 3B shows an image of a cross section of the protein food material C3 of Comparative Example 3. The evaluation point of "4" or more was the good meaty appearance, and the most excellent evaluation point was "5". The results are shown in Table 1.

### - Evaluation point -

5 points: fibrous appearance was clearly observed over the entire surface, and good meatiness was felt.
4 points: fibrous appearance was observed on the surface, and meatiness was felt.
3 points: fibrous appearance was observed in a part of the surface, and slight meatiness was felt.
2 points: fibrous appearance was slightly observed, and meatiness was hardly felt.
1 point: fibrous appearance was not observed and there was no meatiness, or there was burnt and there was no meatiness.

### (Meaty tint)

The protein food materials 1 to 5 and C1 to C3 before the above-described drying treatment were cut into pieces having a size of 5 cm × 5 cm to prepare a sample for evaluation. Meaty tint was evaluated by visual observation by 10 evaluators. The evaluation points are shown below. The evaluation results were obtained by averaging evaluation points of the 10 evaluators and rounding off the value to the first decimal place.

The evaluation point of "2" or more a case in which the meaty tint was good, and the most excellent evaluation point was "3". The results are shown in Table 1.

### - Evaluation point -

3 points: the same tint as the tint of the heated meat (brown)
2 points: tint close to the tint of the heated meat (brown)
1 point: tint different from the tint of the heated meat

### (Burnt)

The protein food materials (extruded product) 1 to 5 and C1 to C3 immediately after being jetted from the cooling die mounted on the two-axis extruder were visually observed, and the presence or absence of burnt was evaluated.

The results are shown in Table 1.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Composition 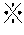 ¹ | Defatted soybean flour | 49 | 49 | 49 | 48.65 | 49 | 49 | 49 | 49 |
| | Wheat gluten | 21 | 21 | 21 | 20.85 | 21 | 21 | 21 | 21 |
| | Colorant | 0 | 0 | 0 | 0.5 | 0 | 0 | 0 | 0 |
| | Moisture | 30 | 30 | 30 | 30 | 30 | 30 | 30 | 30 |
| Cooling die | Temperature (°C) | 120 | 110 | 95 | 110 | 110 | 130 | 80 | 70 |
| | Length (mm) | 300 | 300 | 300 | 300 | 150 | 300 | 300 | 300 |
| Proportion of number of voids (%) | 0.01 mm² or less | 2.5 | 3.2 | 2.0 | 3.0 | 2.5 | - | 0 | 0 |
| | More than 0.01 mm² and 0.1 mm² or less | 55.0 | 64.3 | 50.0 | 61.5 | 62.0 | - | 36.9 | 10.0 |
| | More than 0.1 mm² and 1 mm² or less | 40.5 | 31.0 | 46.0 | 34.0 | 34.0 | - | 60.0 | 70.0 |
| | More than 1 mm² | 2.0 | 1.5 | 2.0 | 1.5 | 1.5 | - | 3.1 | 20.0 |
| | Total | 100.0 | 100.0 | 100.0 | 100.0 | 100.0 | - | 100.0 | 100.0 |
| Alignment degree X_{A}/X_{B} in fibrous region | | 1.181 | 1.074 | 1.005 | 1.034 | 1.102 | - | 1.001 | 1.000 |
| Evaluation | Meaty appearance | 4 | 5 | 4 | 5 | 5 | 1 | 3 | 1 |
| | Meaty tint | 2 | 2 | 2 | 3 | 2 | 1 | 2 | 2 |
| | Burnt | N | N | N | N | N | Y | N | N |

| | | | | | | | | | |
|---|---|---|---|---|---|---|---|---|---|
| 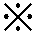 1 Amount put into extruder (% by mass) | | | | | | | | | |

**[Table 2]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Parallel incidence | Peak intensity of amide I band | 1091 | 1101 | 1110 | 1108 | 1095 | - | 1110 | 1115 |
| | Peak intensity of amide II band | 540 | 531 | 526 | 537 | 538 | - | 527 | 529 |
| | Intensity ratio X_{A} | 0.495 | 0.482 | 0.474 | 0.485 | 0.491 | - | 0.475 | 0.474 |
| Perpendicular incidence | Peak intensity of amide I band | 1186 | 1142 | 1112 | 1115 | 1155 | - | 1110 | 1115 |
| | Peak intensity of amide II band | 497 | 513 | 525 | 523 | 514 | - | 526 | 529 |
| | Intensity ratio X_{B} | 0.419 | 0.449 | 0.472 | 0.469 | 0.445 | - | 0.474 | 0.474 |

As shown in Table 1, the protein food materials of Examples, obtained by the production method according to the present disclosure, were excellent in meaty appearance. In addition, the protein food material of Examples had a good meaty tint, and no burning occurred.

(Explanation of References)
10: biaxial extruder
12: hopper
14: barrel
16: screw
18: protein-containing mixture
20: jetting die
22: fiberized protein
24: jetting flow passage
26: outlet
28: void
A: enlarged portion
X: extrusion direction

The entirety of the disclosures of Japanese Patent Application No. 2022-038604 filed on March 11, 2022 and Japanese Patent Application No. 2022-161912 filed on October 6, 2022 is incorporated into the present specification by reference. In addition, all documents, patent applications, and technical standards described in the present specification are incorporated herein by reference to the same extent as in a case of being specifically and individually noted that individual documents, patent applications, and technical standards are incorporated by reference.

## Claims

1. A method for producing a protein food material, comprising:
a step of pressurizing and heating a protein-containing mixture containing a vegetable protein and water in a biaxial extruder to knead the protein-containing mixture, and extruding the kneaded protein-containing mixture from a jetting die provided in the biaxial extruder,
wherein a temperature of the jetting die is 95°C or higher and 120°C or lower.

2. The method for producing a protein food material according to claim 1,
wherein the jetting die has a flow passage having a slit shape, through which the protein-containing mixture flows.

3. The method for producing a protein food material according to claim 1 or 2,
wherein a length of the jetting die in an extrusion direction is in a range of 90 mm or more and 450 mm or less.

4. The method for producing a protein food material according to claim 1 or 2,
wherein the vegetable protein is at least one selected from the group consisting of defatted soybean protein and wheat gluten.

5. The method for producing a protein food material according to claim 1 or 2,
wherein the protein-containing mixture further contains a colorant.

6. A protein food material comprising:
a vegetable protein,
wherein the protein food material has a fibrous region on at least a part of a surface, and has a porous structure, and
in an infrared absorption spectrum of the fibrous region obtained by a polarized infrared total reflection absorption measurement method, in a case where an intensity ratio of a peak intensity of an amide I band to a peak intensity of an amide II band, which are measured by irradiating the fibrous region with a polarized light parallel to the fiber direction of the fibrous region, is denoted as X_{A}, and an intensity ratio of a peak intensity of an amide I band to a peak intensity of an amide II band, which are measured by irradiating the fibrous region with polarized light perpendicular to the fiber direction of the fibrous region, is denoted as X_{B}, an alignment degree X_{A}/X_{B} satisfies 1.005 ≤ X_{A}/X_{B}.

7. The protein food material according to claim 6,
wherein the vegetable protein is at least one selected from the group consisting of defatted soybean protein and wheat gluten.

8. The protein food material according to claim 6 or 7, further comprising:
a colorant.
